# EUROPÄISCHE PATENTSCHRIFT

(11) **EP 2 943 382 B1**
(45) Veröffentlichungstag und Bekanntmachung des Hinweises auf die Patenterteilung: **07.08.2019**
(21) Anmeldenummer: 13798976.0
(22) Anmeldetag: 21.11.2013
(51) Int. Cl.: B60W 30/18, B60W 50/00, B60W 50/14

(54) **VERFAHREN UND VORRICHTUNG ZUR UNTERSTÜTZUNG DES FAHRERS EINES ZWEIRADES BEIM ANFAHREN VON KURVEN**
METHOD AND DEVICE FOR ASSISTING THE RIDER OF A BICYCLE WHEN APPROACHING BENDS
PROCÉDÉ ET DISPOSITIF D'ASSISTANCE DU CONDUCTEUR D'UNE MOTO LORS DE LA PRISE DE VIRAGES

(30) Priorität: 14.01.2013 DE 102013200435
(43) Veröffentlichungstag der Anmeldung: 18.11.2015
(73) Patentinhaber: Robert Bosch GmbH, 70442 Stuttgart (DE)
(72) Erfinder: WAHL, Anja, 71706 Markgroeningen (DE); KOEHLER, Markus, 71691 Freiberg (DE)
(86) Internationale Anmeldenummer: PCT/EP2013/074349
(87) Internationale Veröffentlichungsnummer: WO 2014/108236

(56) Entgegenhaltungen:
- DE-A1-102009 046 226
- DE-A1-102010 027 768
- IT-T1- TO20 100 454
- Anonym: "Richtig in die Kurve gehen", Motorroller - Info , 6. Februar 2011 (2011-02-06), XP002720814, Gefunden im Internet: URL:http://web.archive.org/web/20110206084 006/http://motorroller-info.de/html/body_k urventechnik.html [gefunden am 2014-02-24]
- Drueberbikerin: "Wie fahre ich am besten eine Kurve an ?", Motorradfrage.net , die Motorrad-Ratgeber , 30. Dezember 2009 (2009-12-30), XP002720815, Gefunden im Internet: URL:http://www.motorradfrage.net/frage/wie -fahre-ich-am-besten-eine-kurve-an [gefunden am 2014-02-24]
- Anonym: "Fahrtechnik und Sicherheit ... die Kurventechnik", BikeCam.ch - Fahrtechnik , 30. Dezember 2009 (2009-12-30), XP002720816, Gefunden im Internet: URL:http://bikecam.ch/fahrtechnik.htm [gefunden am 2014-02-24]

## Beschreibung

### Stand der Technik

Die Verwendung von Kameras, insbesondere Monovideokameras, für Fahrerassistenzsysteme für Personenkraftwagen ist bekannt. Mit diesen Systemen lassen sich Fahrbahnmarkierungen und somit die Fahrspur zuverlässig erfassen. Werden die Kamerasysteme dahingehend weiterentwickelt, dass auch Asphaltgrenzen erkannt werden, dann ist die Fahrspur auch ohne Markierung bekannt. Der Einsatz von Kamerasystemen in motorisierten Zweirädern ist heute noch nicht üblich.

Auch Navigationssysteme mit abgespeicherten Karten, welche den vorausliegenden Straßenverlauf enthalten, sind Stand der Technik. Viele Zweiradfahrer prüfen mit einem Blick auf das Navigationssystem, wie die Gestalt der vorausliegenden Kurve ist und wie diese anzufahren ist.

Zum Stand der Technik wird beispielsweise verwiesen auf "Wie fahre ich am besten eine Kurve an" und auf "Fahrtechnik und Sicherheit ... die Kurventechnik", zu finden im Internet.

### Offenbarung der Erfindung

Die Erfindung betrifft ein Verfahren zur Unterstützung des Fahrers eines Zweirades beim Anfahren von Kurven, bei dem
- anhand eines Navigationssystems wenigstens eine topologische Eigenschaft einer sich in Fahrtrichtung vor dem Zweirad befindenden Kurve ermittelt wird,
- die Position des Zweirads innerhalb der eigenen Fahrspur ermittelt wird und
- abhängig von der topologischen Eigenschaft der Kurve und der Position des Zweirads dem Fahrer über Informationsmittel mitgeteilt wird, in welche Richtung er das Zweirad führen muss, um auf die ermittelte Fahrtrajektorie zu gelangen.

Damit wird dem Fahrer das sichere Durchfahren von Kurven erleichtert.

Erfindungsgemäss ist vorgesehen, dass
- abhängig von der wenigstens einen topologischen Eigenschaft eine für das sichere Durchfahren der Kurve geeignete Fahrtrajektorie ermittelt wird,
- abhängig von der ermittelten Fahrtrajektorie und der Position des Zweirads dem Fahrer über Informationsmittel mitgeteilt wird, in welche Richtung er das Zweirad führen muss, um auf die ermittelte Fahrtrajektorie zu gelangen.

Eine vorteilhafte Ausgestaltung der Erfindung ist dadurch gekennzeichnet, dass als topologische Eigenschaft der engste Krümmungsradius der sich vor dem Zweirad befindenden Kurve ermittelt wird. Der Krümmungsradius der Kurve ist die wesentlichste topologische Größe, anhand welcher eine sichere Fahrtrajektorie ermittelt werden kann.

Eine vorteilhafte Ausgestaltung der Erfindung ist dadurch gekennzeichnet, dass die Position des Zweirads in Fahrbahnquerrichtung ermittelt wird, die für die ermittelte Fahrtrajektorie zugehörige Querposition ermittelt wird und abhängig davon die Informationsmittel angesteuert werden.

Eine vorteilhafte Ausgestaltung der Erfindung ist dadurch gekennzeichnet, dass die Informationsmittel ein nach rechts weisendes Pfeilsymbol und ein nach links weisendes Pfeilsymbol beinhalten.

Eine alternative vorteilhafte Ausgestaltung der Erfindung ist dadurch gekennzeichnet, dass es sich bei den Informationsmitteln um ein Headset handelt, in welchem dem Fahrer sprachlich angewiesen wird, die Querposition innerhalb der Fahrspur anzupassen oder zu verändern.

Die beiden letztbeschriebenen Ausgestaltungen sind besonders geeignet, dem Fahrer die geeignete Querposition innerhalb der Fahrspur für ein sicheres Durchfahren der Kurve zu übermitteln.

Eine vorteilhafte Ausgestaltung der Erfindung ist dadurch gekennzeichnet, dass dem Fahrer zusätzlich mitgeteilt wird, ob er das Zweirad bremsen, rollen lassen oder beschleunigen soll. Dies ist eine sinnvolle Zusatzinformation für das sichere Durchfahren einer Kurve.

Eine vorteilhafte Ausgestaltung der Erfindung ist dadurch gekennzeichnet, dass die Mitteilung an den Fahrer dann erfolgt, wenn ein vorgegebener Abstand bis zum Beginn der Kurve erreicht ist.

Eine vorteilhafte Ausgestaltung der Erfindung ist dadurch gekennzeichnet, dass in die Ermittlung der geeigneten Fahrtrajektorie die Zweiradgeschwindigkeit eingeht. Damit kann berücksichtigt werden, dass mit zunehmender Geschwindigkeit ein früheres Abbremsen für das Zweirad erforderlich ist.

Eine vorteilhafte Ausgestaltung der Erfindung ist dadurch gekennzeichnet, dass es sich bei dem Zweirad um ein Motorrad handelt.

Weiter umfasst die Erfindung eine Vorrichtung, enthaltend Mittel, die zur Durchführung der erfindungsgemäßen Verfahren ausgestaltet sind. Bei dieser Vorrichtung handelt es sich insbesondere um ein Steuergerät, welches mit dem Programmcode zur Durchführung der erfindungsgemäßen Verfahren ausgestattet ist.

Die Zeichnung besteht aus den Figuren 1 bis 3.
Figur 1 zeigt eine optimale Fahrtrajektorie für Zweiräder.
Figur 2 zeigt ein ungeeignetes Anfahren einer Linkskurve durch ein Motorrad. Die Kurve wird dabei zu weit innen angefahren.
Figur 3 zeigt in Form eines Flussdiagramms den Ablauf einer Ausführungsform des erfindungsgemäßen Verfahrens.

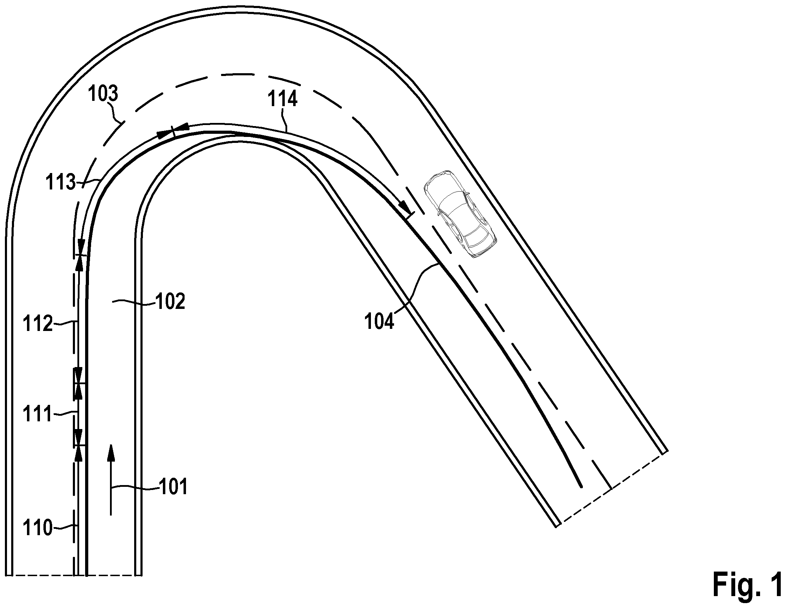

Im Gegensatz zu Personenkraftwagen bietet die Fahrbahnbreite aufgrund der geringen seitlichen Ausdehnung von motorisierten Zweirädern Zweiradfahrern die Möglichkeit, ihre tatsächliche Fahrtrajektorie für die Kurvenfahrt innerhalb der Fahrspur angepasst und somit für die Motorradfahrt optimal zu wählen. Eine solche optimale Fahrtrajektorie zeigt Figur 1. Dort kennzeichnet der Pfeil 101 ein sich in Pfeilrichtung bewegendes Motorrad, welches in eine Rechtskurve fährt. 102 kennzeichnet die rechte Fahrspur, auf welcher sich das Motorrad befindet, 103 die Mittellinie, welche die rechte Fahrspur gegen die Gegenfahrspur abgrenzt. Die durchgezogene Linie 104 kennzeichnet die für das Motorrad optimale Fahrtrajektorie. Zugleich sind in Figur 1 mit den Bezugszeichen 110 - 113 die für die Kurvenfahrt optimalen Fahrzustände "Bremsen", "Rollen" und "Beschleunigen" eingezeichnet. Ausgehend von einem im Bereich 110 noch beschleunigenden Motorrad geht der Fahrzustand im Bereich 111 in ein Rollen und im Bereich 112 in einen Bremsvorgang über. Im Bereich 113, dem Anfangsbereich der Kurve, erfolgt wieder ein Rollen des Motorrads und im Bereich 114 ist ein Beschleunigen des Motorrads sinnvoll.

Der Kurvenanfahrassistent für motorisierte Zweiräder soll den Fahrer unterstützen, eine Kurve richtig anzufahren. Mit den Daten eines Navigationssystems ist es bekannt, wie weit sich der Motorradfahrer vor einer Kurve befindet. Ein am Motorrad verbautes Kamerasystem bestimmt die Position des Motorrads innerhalb der eigenen Fahrspur. Somit ist es möglich zu erkennen, ob die Position des Motorrads innerhalb der Fahrspur für eine optimale Kurvenfahrt geeignet ist. Ist die Abweichung der Position von der Position der optimalen Kurveneinfahrt, welche üblicherweise kurvenaußen ist, zu groß, dann wird dem Motorradfahrer rechtzeitig vor der Kurve mitgeteilt, das Zweirad auf die geeignete Trajektorie zu führen. Dies kann z.B. durch die Anzeige eines Links- oder eines Rechtspfeiles im Cockpit erfolgen oder über eine entsprechende Ansage in einem Headset. Mit der vorliegenden Erfindung werden Zweiradfahrer unterstützt, die Kurven außenseitig anzufahren, da bei einer fahrbahnmittigen Anfahrt der Kurven häufig die Gefahr besteht, dass das Zweirad im Kurvenausgang auf die Gegenfahrbahn gerät.

Zur Realisierung der Erfindung muss das Motorrad mit einem Kamerasystem und einem Navigationssystem ausgestattet sein. Mit dem Kamerasystem kann die Fahrspur und die Position des Fahrzeugs innerhalb der eigenen Fahrspur erfasst werden. Bei Personenkraftwagen wird die Fahrspurerkennung bereits für Assistenzsysteme eingesetzt. Für motorisierte Zweiräder sollte die Erkennung der Fahrbahnmarkierung dahingehend erweitert werden, dass bei dem Bildverarbeitungsalgorithmus für die Fahrspurerkennung die im Vergleich zum PKW relativ großen Wankwinkel berücksichtigt werden.

Sollte keine Fahrbahnmarkierung vorliegen, dann kann anhand der Asphaltgrenzen mit Hilfe der Kamera die gesamte Fahrbahnbreite erfasst und damit wiederum die eigene Fahrtrajektorie errechnet werden. Über ein Navigationssystem ist der vorausliegende Kurvenverlauf und im speziellen auch der engste Kurvenradius r bekannt.

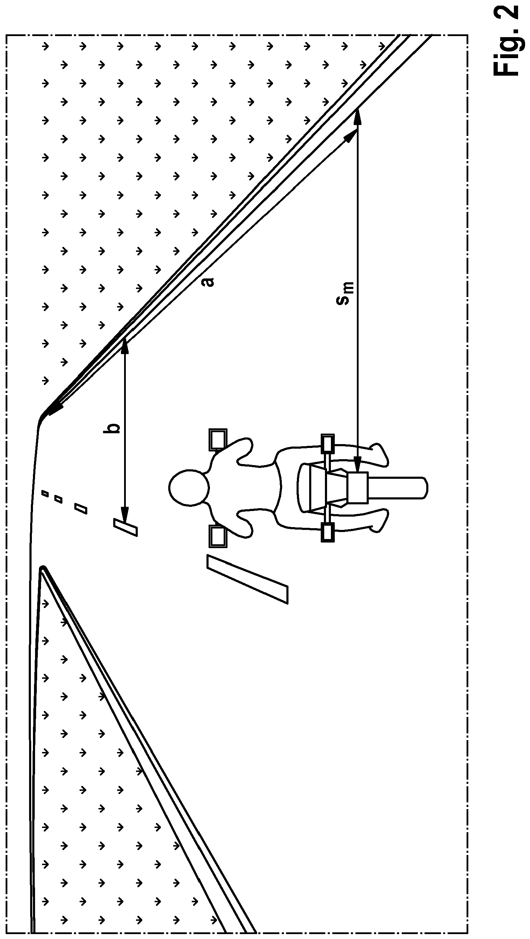

Figur 2 zeigt ein Motorrad bei der Anfahrt einer Linkskurve. Abhängig von der eigenen Fahrspurbreite b, der Distanz a bis zum Kurveneintritt, der aktuellen Fahrzeuggeschwindigkeit v und dem vorausliegenden Kurvenverlauf mit dem engsten auftretenden Kurvenradius r, d.h. der stärksten Krümmung der Kurve, wird im Kurvenanfahrassistent eine optimale Fahrtrajektorie und damit eine optimale Kurvenanfahrposition s0 bestimmt. Überschreitet der Abstand der Position sm des Motorrads innerhalb der eigenen Fahrspur von der optimalen Kurvenanfahrposition s0 eine vorgegebene Schwelle, dann wird der Fahrer in geeigneter Weise, z.B. über Pfeile im Cockpit oder über eine akustische Ansage im Headset, dazu angeregt, seine Position innerhalb der Fahrspur zu korrigieren.

In einer weiteren Ausbaustufe ist es denkbar, den Fahrer nicht nur bei der Kurvenanfahrt zu unterstützen, sondern ihm im Display des Navigationssystems auch die optimale Fahrtrajektorie mit den Bereichen Bremsung, Rollen und Beschleunigen anzuzeigen. Idealerweise wird dieser erweiterte Kurvenanfahrassistent mit einem Kurvenwarner kombiniert.

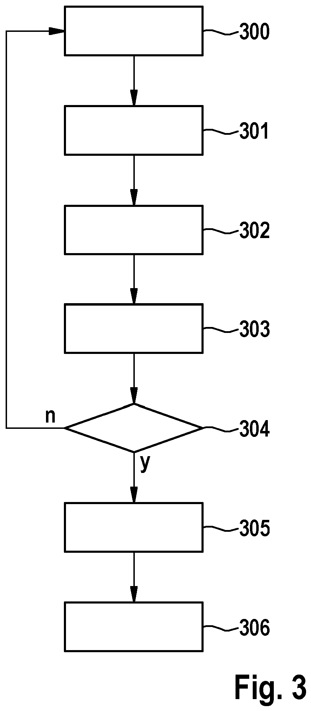

Figur 3 zeigt in Form eines Flussablaufplans eine Ausgestaltung des erfindungsgemäßen Verfahrens. Nach dem Start des Verfahrens in Block 300 wird in Block 301 wenigstens eine topologische Eigenschaft, z.B. der minimale Krümmungsradius, einer sich in Fahrtrichtung vor dem Zweirad befindenden Kurve ermittelt. Anschließend wird in Block 302 eine für das Durchfahren der Kurve sichere Fahrtrajektorie ermittelt. Danach wird in Block 303 die Position des Zweirads innerhalb seiner Fahrspur ermittelt. Das kann insbesondere eine Querkoordinate, d.h. eine die Position des Zweirads in Fahrbahnquerrichtung kennzeichnende Koordinate sein. In Block 304 wird danach abgefragt, ob die Differenz zwischen der Querkoordinate des Zweirads und der entsprechenden Querkoordinate der sicheren Fahrtrajektorie einen Schwellenwert überschreitet. Ist dies nicht der Fall, d.h. das Zweirad befindet sich im wesentlichen auf der optimalen Fahrtrajektorie, dann wird zu Block 300 zurückgekehrt. Überschreitet die Differenz jedoch den Schwellenwert, dann wird in Block 305 dem Fahrer ein Hinweis auf die geeignete Querposition innerhalb der Fahrspur gegeben und gegebenfalls auch auf die Führungsrichtung, damit das Fahrzeug auf die optimale Trajektorie bzw. geeignete Querposition gelangt. In Block 306 endet das erfindungsgemäße Verfahren.

## Patentansprüche

1. Verfahren zur Unterstützung des Fahrers eines Zweirades beim Anfahren von Kurven, bei dem
- anhand eines Navigationssystems wenigstens eine topologische Eigenschaft einer sich in Fahrtrichtung vor dem Zweirad befindenden Kurve ermittelt wird (301),
- abhängig von der wenigstens einen topologischen Eigenschaft eine für das sichere Durchfahren der Kurve geeignete Fahrtrajektorie ermittelt wird (302),
- die Position des Zweirads innerhalb der eigenen Fahrspur ermittelt wird (303) und
- abhängig von der ermittelten Fahrtrajektorie und der Position des Zweirads dem Fahrer über Informationsmittel mitgeteilt wird, in welche Richtung er das Zweirad führen muss, um auf die ermittelte Fahrtrajektorie zu gelangen (305).

2. Verfahren nach Anspruch 1, **dadurch gekennzeichnet, dass** als topologische Eigenschaft der engste Krümmungsradius (r) der sich vor dem Zweirad befindenden Kurve ermittelt wird (301).

3. Verfahren nach Anspruch 1, dass die Position der Zweirads in Fahrbahnquerrichtung (sm) ermittelt wird, die für die ermittelte Fahrtrajektorie zugehörige Querposition (s0) ermittelt wird und abhängig davon die Informationsmittel angesteuert werden (305).

4. Verfahren nach Anspruch 1, **dadurch gekennzeichnet, dass** die Informationsmittel ein nach rechts weisendes Pfeilsymbol und ein nach links weisendes Pfeilsymbol beinhalten (305).

5. Verfahren nach Anspruch 1, **dadurch gekennzeichnet, dass** es sich bei den Informationsmitteln um ein Headset handelt, mit welchem der Fahrer sprachlich angewiesen wird, die Querposition innerhalb der Fahrspur in die angegebene Richtung zu ändern.

6. Verfahren nach Anspruch 1, **dadurch gekennzeichnet, dass** dem Fahrer zusätzlich mitgeteilt wird, ob er das Zweirad bremsen, rollen lassen oder beschleunigen soll.

7. Verfahren nach Anspruch 1, **dadurch gekennzeichnet, dass** die Mitteilung an den Fahrer dann erfolgt, wenn ein vorgegebener Abstand (a) bis zum Beginn der Kurve erreicht ist.

8. Verfahren nach Anspruch 1, **dadurch gekennzeichnet, dass** in die Ermittlung der geeigneten Fahrtrajektorie die Zweiradgeschwindigkeit eingeht.

9. Verfahren nach Anspruch 1, **dadurch gekennzeichnet, dass** es sich bei dem Zweirad um ein Motorrad handelt.

10. Vorrichtung, enthaltend Mittel, die zur Durchführung des Verfahrens nach einem oder mehreren der vorhergehenden Ansprüche ausgestaltet sind.

## Claims

1. Method for assisting the rider of a bicycle when approaching bends, in which
- at least one topological property of a bend located in front of the bicycle in the direction of travel is determined by means of a navigation system (301),
- a travel trajectory which is suitable for safely travelling through the bend is determined as a function of the at least one topological property (302),
- the position of the bicycle within its own lane is determined (303) and
- the direction in which the bicycle must travel in order to arrive at the determined travel trajectory is communicated to the rider as a function of the determined travel trajectory and the position of the bicycle using information means.

2. Method according to Claim 1, **characterized in that** the tightest bend radius (r) of the bend located in front of the bicycle is determined as a topological property (301).

3. Method according to Claim 1, in that the position of the bicycle is determined in the transverse direction (sm) of the carriageway, the transverse position (s0) which is associated with the determined travel trajectory is determined, and the information means are actuated as a function thereof (305).

4. Method according to Claim 1, **characterized in that** the information means contain an arrow symbol which points to the right and an arrow symbol which points to the left (305).

5. Method according to Claim 1, **characterized in that** the information means are a headset with which the rider can be instructed verbally to change the transverse position within the lane in the specified direction.

6. Method according to Claim 1, **characterized in that** it is additionally communicated to the rider whether he is to brake the bicycle, allow it to roll or accelerate it.

7. Method according to Claim 1, **characterized in that** the communication to the rider takes place when a predefined distance (a) up to the start of the bend has been reached.

8. Method according to Claim 1, **characterized in that** the two-wheel speed is input into the determination of the suitable travel trajectory.

9. Method according to Claim 1, **characterized in that** the bicycle is a motorcycle.

10. Device, containing means which are configured to carry out the method according to one or more of the preceding claims.

## Revendications

1. Procédé d'assistance au conducteur d'un deux-roues lors de la prise de virages, dans lequel
- au moins une caractéristique topologique d'un virage situé à l'avant du deux-roues dans le sens du parcours est déterminée (301) au moyen d'un système de navigation,
- en fonction de ladite au moins une propriété topologique, une trajectoire appropriée pour le passage en sécurité du virage est déterminée (302),
- la position du deux-roues à l'intérieur de sa voie de circulation est déterminée (303), et
- en fonction de la trajectoire de circulation déterminée et de la position du deux-roues, via un moyen d'information, il est communiqué au conducteur dans quelle direction il doit diriger le deux-roues pour atteindre la trajectoire de circulation déterminée (305).

2. Procédé selon la revendication 1, **caractérisé en ce que** le rayon de courbure le plus étroit (r) du virage situé à l'avant du deux-roues est déterminé (301) en tant que propriété topologique.

3. Procédé selon la revendication 1, **caractérisé en ce que** la position du deux-roues dans la direction transversale (sm) de la chaussée est déterminée, **en ce que** la position transversale (s0) associée à la trajectoire de circulation déterminée est déterminée et **en ce que** les moyens d'information (305) sont commandés en conséquence.

4. Procédé selon la revendication 1, **caractérisé en ce que** les moyens d'information comprennent un symbole de flèche pointant à droite et un symbole de flèche pointant à gauche (305).

5. Procédé selon la revendication 1, **caractérisé en ce que** les moyens d'information sont un casque d'écoute au moyen duquel il est demandé verbalement au conducteur de modifier la position transversale dans la direction indiquée à l'intérieur de la voie de circulation.

6. Procédé selon la revendication 1, **caractérisé en ce qu'**il est en outre communiqué au conducteur s'il doit freiner, laisser rouler ou accélérer le deux-roues.

7. Procédé selon la revendication 1, **caractérisé en ce que** la communication au conducteur est effectuée lorsqu'une distance prédéterminée (a) est atteinte par rapport au début du virage.

8. Procédé selon la revendication 1, **caractérisé en ce que** la vitesse du deux roues est prise en compte dans la détermination de la trajectoire de circulation appropriée.

9. Procédé selon la revendication 1, **caractérisé en ce que** le deux-roues est une moto.

10. Dispositif comportant des moyens conçus pour mettre en oeuvre le procédé selon l'une ou plusieurs des revendications précédentes.
